(19) Europäisches Patentamt European Patent Office Office européen des brevets

(11) **EP 4 693 696 A1**

(12) **EUROPEAN PATENT APPLICATION**
published in accordance with Art. 153(4) EPC

(43) Date of publication:
**11.02.2026 Bulletin 2026/07**

(21) Application number: **23943485.5**

(22) Date of filing: **27.12.2023**

(51) International Patent Classification (IPC):
*H01M 50/516* (2021.01)

(52) Cooperative Patent Classification (CPC):
Y02E 60/10

(86) International application number:
**PCT/CN2023/142180**

(87) International publication number:
**WO 2025/001014 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.06.2023 CN 202321653972 U**

(71) Applicant: **Sunwoda Mobility Energy Technology Co., Ltd.**
**Shenzhen, Guangdong 518107 (CN)**

(72) Inventor: **SHEN, Kun**
**Shenzhen, Guangdong 518107 (CN)**

(74) Representative: **Elzaburu S.L.P.**
**Edificio Torre de Cristal**
**Paseo de la Castellana 259 C, planta 28**
**28046 Madrid (ES)**

(54) **BATTERY PACK AND ELECTRIC DEVICE**

(57) The present application discloses a battery pack and an electric device. An end face of a pole of a single battery of the battery pack in a preset direction is connected to a bus-bar or a connector. In the present application, a position where the bus-bar or the connector is connected on the end face of the pole is spaced apart from an outer edge of the end face, that is, a welding position on the end face of the pole is spaced apart from the outer edge of the end face. In this way, the welding position on the end face of the pole can be kept as far away as possible from a sealing member, thereby reducing the risk of the melting of sealing member during welding and consequently reducing the risk of sealing failure of the sealing member.

FIG. 5

## Description

The present application claims priority to Chinese Patent Application No. 202321653972.1, filed with China National Intellectual Property Administration on June 27, 2023, and entitled "BATTERY PACK AND ELECTRIC DEVICE", the content of which is hereby incorporated by reference in its entirety.

## TECHNICAL FIELD

The present application relates to, but is not limited to, a battery pack and an electric device.

## BACKGROUND

As the core component and power source of new energy vehicles, power batteries are the focus of current research. The storage capacity of the power battery determines the driving range of new energy vehicles. The top cover and the pole terminal of the power battery are usually sealed with plastic. The pole terminal is usually connected to the external circuit structure by welding. Due to the high temperature during the welding, the plastic on the top cover is prone to melting, which leads to sealing failure and other issues.

## SUMMARY

The present application provides a battery pack. The battery pack includes a single battery, and the single battery includes a shell and a top cover assembly. The shell and the top cover assembly are butted to form a cavity for accommodating a battery cell. The battery pack further includes a bus-bar, which is electrically connected to the single battery, where the top cover assembly has a preset direction, and the top cover assembly includes a top cover member. The top cover member is provided with an assembly hole, and the assembly hole is penetrated through the top cover member along the preset direction. The top cover assembly further includes a pole, the pole is disposed through the assembly hole. An end face of the pole in a preset direction is connected to the bus-bar, where a position of the end face connected to the bus-bar is spaced from an outer edge of the end face. The top cover assembly further includes a sealing member, which is arranged between the pole and the top cover member.

In an embodiment of the present application, an area of the end face of the pole in the preset direction is A mm2, and an area of an end face of the top cover member in the preset direction is M mm2, where $\dfrac{M}{16} \le A \le \dfrac{M}{4}$.

In an embodiment of the present application, the area of the end face of the pole in the preset direction is A mm2, satisfying: A≥150.

In an embodiment of the present application, the end face of the pole in a preset direction includes a first end face and a second end face, and the first end face and the second end face are spaced apart from each other in the preset direction; where the first end face is connected to the bus-bar, and a position where the bus-bar is connected on the first end face is spaced from an outer edge of the first end face; the single battery further includes a connector, the pole is electrically connected to the battery cell through the connector, the second end face is connected to the connector, and a position where the connector is connected on the second end face is spaced from an outer edge of the second end face.

In an embodiment of the present application, the pole includes: a pole body, which is disposed through the assembly hole; and a limiting portion, which is connected to one end of the pole body in a preset direction, an end face of the limiting portion facing away from the pole body is a first end face, and an end face of the pole body facing away from the limiting portion is a second end face, and the limiting portion cooperates with the connector to clamp the top cover member so as to fix the pole to the top cover member.

In an embodiment of the present application, an area of the second end face is smaller than an area of the end face of the connector facing the pole.

In an embodiment of the present application, an area of the first end face is greater than the area of the second end face.

In an embodiment of the present application, the sealing member includes: a first sealing portion surrounding the outer periphery of the pole body, the first sealing portion being sandwiched between the pole body and the hole wall of the assembly hole; a second sealing portion connected to the first sealing portion and surrounding the outer periphery of the limiting portion; and a third sealing portion connected to the first sealing portion, the third sealing portion being sandwiched between the top cover member and the connector; where the first sealing portion, the second sealing portion, and the third sealing portion are an integrally injection-molded structure.

In an embodiment of the present application, an area of the end face is A mm2, and an area of a position where the bus-bar is connected on the end face is S mm2, satisfying: 0.06≤S/A≤0.6.

Correspondingly, the present application further provides a battery pack, including: a single battery including a shell, a top cover assembly, a battery cell and a connector, where the shell and the top cover assembly are butted to form a cavity for accommodating the battery cell, and the connector is electrically connected to the battery cell; and a bus-bar, which electrically connected to the single battery; where the top cover assembly has a preset direction, and the top cover assembly includes: a top cover member, which is provided with an assembly hole, the assembly hole being penetrated through the top cover member along the preset direction; a pole, which is disposed through the assembly hole, an end face of the pole in the preset direction being connected to the connector, and a position where the connector is connected on the end face is spaced from an outer edge of the end face; and a sealing member, which is arranged between the pole and the top cover member.

In an embodiment of the present application, an area of the end face of the pole in the preset direction is A mm2, and an area of an end face of the top cover member in the preset direction is M mm2, where $\dfrac{M}{16} \leq A \leq \dfrac{M}{4}$ .

In an embodiment of the present application, the area of the end face of the pole in the preset direction is A mm2, satisfying: A≥150.

In an embodiment of the present application, an area of the end face is A mm2, and an area of a position where the connector is connected on the end face is S mm2, satisfying: 0.06≤S/A≤0.6.

Accordingly, the present application further provides an electric device. The electric device includes the battery pack as described in the above embodiment, and the battery pack serves as a power supply for the electric device.

**BRIEF DESCRIPTION OF DRAWINGS**

In order to illustrate the technical solutions in the embodiments of the present application more clearly, the following briefly introduces the drawings required for describing the embodiments. Obviously, the drawings in the following description are merely some embodiments of the present application. For persons skilled in the art, other drawings can also be obtained based on these drawings without creative effort.

FIG. 1 is a schematic structural diagram of an embodiment of a top cover assembly of the present application.

FIG. 2 is an exploded schematic structural diagram of the top cover assembly shown in FIG. 1.

FIG. 3 is a schematic cross-sectional structural diagram of the top cover assembly shown in FIG. 1 taken along the A-A direction.

FIG. 4 is a schematic structural diagram of area B of the top cover assembly shown in FIG. 3.

FIG. 5 is a schematic structural diagram of an embodiment of a pole of the present application.

FIG. 6 is a schematic structural diagram of the pole shown in FIG. 5 viewed from a bottom-up perspective.

FIG. 7 is a schematic structural diagram of an embodiment of a connector of the present application.

**DESCRIPTION OF EMBODIMENTS**

The technical solutions in the embodiments of the present application will be described clearly and completely below in conjunction with the drawings in the embodiments of the present application. Obviously, the described embodiments are only a part of the embodiments of the present application, and not all of them. Based on the embodiments of the present application, all other embodiments obtained by persons skilled in the art without creative effort fall within the scope of protection of the present application.

In an embodiment, the electric device includes a battery pack. The battery pack includes a single battery. The single battery includes but is not limited to a lithium-ion secondary battery, a lithium-ion primary battery, a lithium-sulfur battery, a sodium-lithium-ion battery, a sodium-ion battery, or a magnesium-ion battery, etc., and the embodiments of the present disclosure are not limited to this. The battery pack serves as the power source for the electric device. The electric device may be a mobile phone, a portable device, a laptop computer, an electric bicycle, an electric vehicle, a ship, an aircraft, an electric toy, an electric tool, and the like. For example, the aircraft includes airplanes, rockets, space shuttles, and spacecraft; electric toys include fixed or mobile electric toys, such as game consoles, electric car toys, electric ship toys, and electric airplane toys; electric tools include metal-cutting electric tools, grinding electric tools, assembling electric tools, and railway electric tools, such as electric drills, electric grinders, electric wrenches, electric screwdrivers, electric hammers, electric impact drills, concrete vibrators, and electric planers.

The battery pack further includes a bus-bar. The number of single batteries in the battery pack is multiple, and the single batteries are connected in series via the bus-bar. Alternatively, the single battery is connected via the bus-bar to electrical components in the battery pack, such as a BDU (Battery Energy Distribution Unit).

The single battery according to the embodiments of the present application is elaborated below.

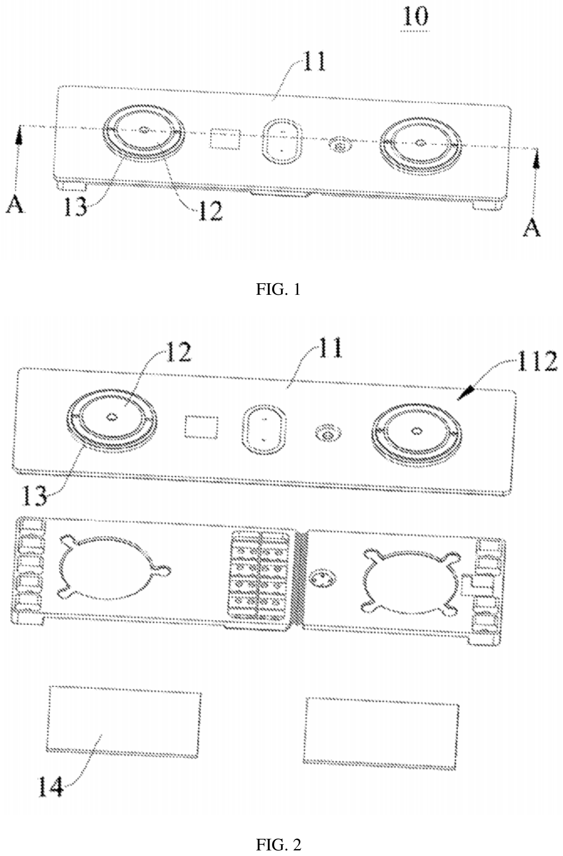

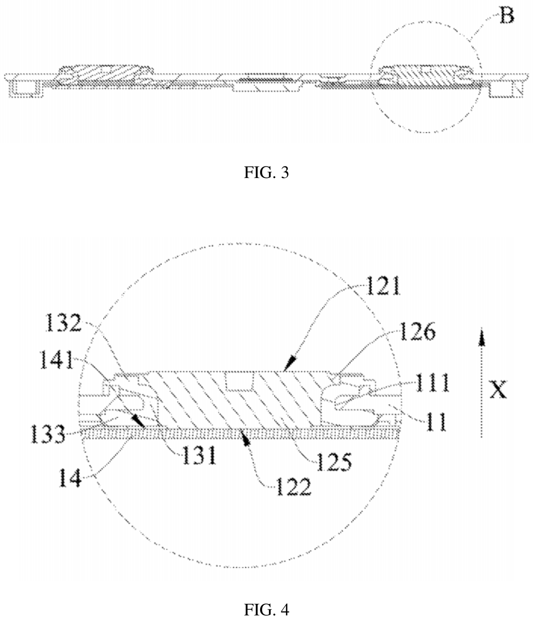

Please refer to FIG. 1 to FIG. 4. FIG. 1 is a schematic structural diagram of an embodiment of a top cover assembly of the present application; FIG. 2 is an exploded schematic structural diagram of the top cover assembly shown in FIG. 1; FIG. 3 is a schematic cross-sectional structural diagram of the top cover assembly shown in FIG. 1 taken along the A-A direction; FIG. 4 is a schematic structural diagram of area B of the top cover assembly shown in FIG. 3.

In an embodiment, the single battery includes a shell and a top cover assembly 10, and the shell and the top cover assembly 10 are butted to form a cavity for accommodating a battery cell. Where, the top cover assembly 10 of the single battery is connected to the bus-bar.

Specifically, the top cover assembly 10 has a preset direction (as indicated by arrow X in FIG. 4, the same below). The top cover assembly 10 includes a top cover member 11. The top cover member 11 is provided with an assembly hole 111, and the assembly hole 111 is penetrated through the top cover member 11 along the preset direction. The top cover assembly 10 further includes a pole 12. The pole 12 is disposed through the assembly hole 111. The top cover assembly 10 further includes a connector 14. The pole 12 is electrically connected to the battery cell via the connector 14. The top cover assembly 10 further includes a sealing member 13. The sealing member 13 is disposed between the pole 12 and the top cover member 11.

An end face of the pole 12 in the preset direction is connected to the bus-bar or the connector 14, and a position where the bus-bar or the connector 14 is connected on the end face is spaced apart from an outer edge of the end face. In this way, the end face of the pole 12 and the bus-bar or the connector 14 are usually connected each other by welding, and the area defined by the connection position between the end face of the pole 12 and the bus-bar or the connector 14 is the welding area. In this embodiment, the position where the bus-bar or the connector 14 is connected on the end face of the pole 12 is spaced apart from the outer edge of the end face, meaning the welding position on the end face of the pole 12 is spaced apart from the outer edge of the end face. This arrangement enables the welding position on the end face of the pole 12 to be as far away from the sealing member 13 as possible. The end face of the pole 12 can provide sufficient space for buffering and heat dissipation, so that the temperature at the contact position between the sealing member 13 and the pole 12 does not reach the melting temperature, that is, the risk of melting the sealing member 13 during the welding can be reduced, thereby reducing the risk of sealing failure of the sealing member 13.

It should be noted that after the end face of the pole 12 is welded to the bus-bar or the connector 14, whether the sealing member 13 has a melting phenomenon can be observed by visual inspection.

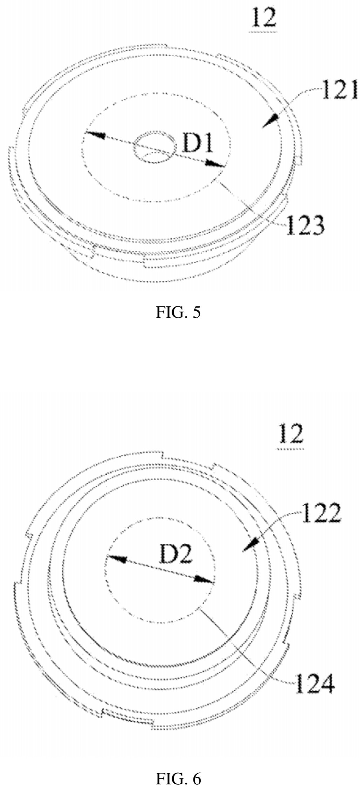

Further, the end face of the pole 12 in the preset direction includes a first end face 121 and a second end face 122. The first end face 121 and the second end face 122 are spaced apart from each other in the preset direction. The first end face 121 is connected to the bus-bar, and the position where the bus-bar is connected on the first end face 121 is spaced apart from the outer edge of the first end face 121. The position where the bus-bar is connected on the first end face 121 defines a first welding area 123, as shown in FIG. 5. The second end face 122 is connected to the connector 14, and the position where the connector 14 is connected on the second end face 122 is spaced apart from the outer edge of the second end face 122, where the position where the connector 14 is connected on the second end face 122 defines a second welding area 124, as shown in FIG. 6.

In an embodiment, an area of the end face of the pole 12 in the preset direction is A mm2, and an area of an end face of the top cover member 11 in the preset direction is M mm2, where $\dfrac{M}{16} \le A \le \dfrac{M}{4}$ . In this way, in this embodiment, by reasonably setting the area of the end face of the pole 12 in the preset direction, on one hand, it can avoid as much as possible that the welding position on the end face is too close to the sealing member 13 due to the area of the end face being too small, further reducing the risk of sealing failure of the sealing member 13; on the other hand, it can avoid as much as possible that the connection strength of the welding area fails to meet requirements due to the area of the end face being too large.

Specifically, taking the end face of the top cover member 11 facing away from the battery cell (i.e., a third end face 112, as shown in FIG. 2) as an example, the area of the third end face 112 is M mm2. For the case where the end face of the pole 12 in the preset direction includes the first end face 121 and the second end face 122 as described above, the area of the first end face 121 is A1 mm2, where $\dfrac{M}{16} \le A1 \le \dfrac{M}{4}$ , and the area of the second end face 122 is A2 mm2, where $\dfrac{M}{16} \le A2 \le \dfrac{M}{4}$ .

It should be noted that regarding the method for obtaining the area of the first end face 121, the area of the second end face 122, and the area of the end face of the top cover member 11 in the preset direction in the embodiments of the present application, a CCD (charge coupled device) camera can be used to capture images of the first end face 121, the second end face 122, and the end face of the top cover member 11 in the preset direction and then measurement software can be used to identify the images of the aforementioned end faces in the captured images and calculate areas of the aforementioned end faces.

Furthermore, after the pole 12 is welded to the bus-bar or the connector 14 in the embodiments of the present application, the connection strength of the welding area should meet certain requirements. Specifically, the drawing force of the welding area is required to be greater than a set value. The drawing force of the welding area should be understood as the minimum drawing force required to separate the pole 12 from the bus-bar or to separate the pole 12 from the connector 14 after welding. Taking the pole 12 and the bus-bar as an example, the drawing force of the welding area can be tested using an equipment such as a tensile testing mechanism. For instance, the tensile testing mechanism draws the pole 12 and the bus-bar respectively, and by gradually increasing the drawing force, the pole 12 and the bus-bar are separated. The tensile testing mechanism can record the tensile force value at the moment when the pole 12 and the bus-bar are just separated; the tensile force value is the drawing force of the welding area. For example, it is generally required that the drawing force of the welding area is greater than or equal to 500N, etc.

In an embodiment, the area of the end face of the pole 12 in the preset direction is A mm2, satisfying: $A \geq 150$. In this way, in this embodiment, by reasonably setting the area of the end face of the pole 12 in the preset direction, it can avoid as much as possible that the welding position on the end face is too close to the sealing member 13 due to the area of the end face being too small, further reducing the risk of sealing failure of the sealing member 13.

Specifically, taking the end face of the top cover member 11 facing away from the battery cell (i.e., the third end face 112) as an example, the area of the third end face 112 is M mm2. For the case where the end face of the pole 12 in the preset direction includes the first end face 121 and the second end face 122 mentioned above, the area of the first end face 121 is A1 mm2, satisfying: $A1 \geq 150$, and the area of the second end face 122 is A2 mm2, satisfying: $A2 \geq 150$.

In an embodiment, the area of the end face of the pole 12 in the preset direction is A mm2, and the area of the position where the bus-bar or the connector 14 is connected on the end face is S mm2, satisfying: $0.06 \leq S/A \leq 0.6$. In this way, in this embodiment, by reasonably setting the area of the end face of the pole 12 in the preset direction and the area of the position where the bus-bar or the connector 14 is connected on the end face, on one hand, it can avoid as much as possible that the welding position on the end face is too close to the sealing member 13 due to the area of the end face being too small, further reducing the risk of sealing failure of the sealing member 13; on the other hand, it can avoid as much as possible that the connection strength of the welding area fails to meet requirements due to the area of the end face being too large.

Specifically, taking the end face of the top cover member 11 facing away from the battery cell (i.e., the third end face 112) as an example, the area of the third end face 112 is M mm2. For the case where the end face of the pole 12 in the preset direction includes the first end face 121 and the second end face 122, the area of the first end face 121 is A1 mm2, the area of the position where the bus-bar is connected on the first end face 121 is S1 mm2, satisfying: $0.06 \leq S1/A1 \leq 0.6$; and the area of the second end face 122 is A2 mm2, the area of the position where the connector 14 is connected on the second end face 122 is S2 mm2, satisfying: $0.06 \leq S2/A2 \leq 0.6$. FIG. 5 exemplarily shows the position where the bus-bar is connected on the first end face 121 being circular, i.e., the first welding area 123 is circular, where the diameter of the circle is D1 mm, satisfying: $7 \leq D1 \leq 13$; thus, the area of the position where the bus-bar is connected on the first end face 121 can be calculated from the diameter D1. FIG. 6 exemplarily shows the position where the connector 14 is connected on the second end face 122 being circular, i.e., the second welding area 124 is circular, where the diameter of the circle is D2 mm, satisfying: $7 \leq D2 \leq 13$; thus, the area of the position where the connector 14 is connected on the second end face 122 can be calculated from the diameter D2. It is understandable that the position where the bus-bar is connected on the first end face 121 and the position where the connector 14 is connected on the second end face 122 can also be regular shapes such as square, triangle, etc., or irregular shapes.

In an embodiment, the pole 12 includes a pole body 125 and a limiting portion 126. The pole body 125 is disposed through the assembly hole 111. The limiting portion 126 is connected to one end of the pole body 125 in the preset direction. The end face of the limiting portion 126 facing away from the pole body 125 is the first end face 121, and the end face of the pole body 125 facing away from the limiting portion 126 is the second end face 122. The limiting portion 126 cooperates with the connector 14 to clamp the top cover member 11, so as to fix the pole 12 to the top cover member 11.

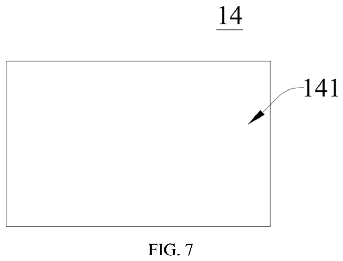

Specifically, the area of the first end face 121 is greater than the area of the second end face 122, and the area of the second end face 122 is less than the area of the end face (i.e., a fourth end face 141, as shown in FIG. 7) of the connector 14 facing the pole 12. In other words, the limiting portion 126 protrudes outward relative to the pole body 125 in a direction perpendicular to the preset direction. Similarly, the connector 14 protrudes outward relative to the pole body 125 in a direction perpendicular to the preset direction, enabling the limiting portion 126 and the connector 14 to cooperatively clamp the top cover member 11, thereby fixing the pole 12 to the top cover member 11. Furthermore, the area of end face of the connector 14 is relatively large, which can restrict the pole 12 from falling off from the inside to the outside, and preventing the pole 12 from separating from the sealing member 13 under force, thereby further reducing the risk of sealing failure of the sealing member 13.

In an embodiment, the sealing member 13 includes a first sealing portion 131, a second sealing portion 132, and a third sealing portion 133. The first sealing portion 131 surrounds the outer periphery of the pole body 125, and the first sealing portion 131 is sandwiched between the pole body 125 and the hole wall of the assembly hole 111, so that a sealing is formed between the pole body 125 and the hole wall of the assembly hole 111 and they are insulated from each other. The second sealing portion 132 is connected to the first sealing portion 131 and surrounds the outer periphery of the limiting portion 126, so that a sealing is formed between the limiting portion 126 and the top cover plate and they are insulated from each other. The third sealing portion 133 is connected to the first sealing portion 131, and the third sealing portion 133 is sandwiched between the top cover member 11 and the connector 14, so that a sealing is formed between the top cover member 11 and the connector 14 and they are insulated from each other.

The first sealing portion 131, the second sealing portion 132, and the third sealing portion 133 are an integrally injection-molded structure. In other words, the sealing member 13 of this embodiment is integrally injection-molded. Specifically, the pole 12 and the top cover plate are typically made of metal material. The pole 12 and the top cover plate undergo surface nanocrystallization treatment, so that numerous nanoscale micropores with a diameter ranging from 20nm to 200nm are etched on surfaces of the pole 12 and the top cover plate. Then, the pole 12 and the top cover plate are placed in a mold, and the sealing member 13 is integrally injection-molded. Through the full integration of the plastic particles with the nanoscale micropores on the surfaces of the pole 12 and the top cover plate, an effective sealing surface is formed, ensuring the air tightness requirement.

In the prior art, the pole 12 terminal of a power battery is usually sealed with the top cover via a sealing ring at its bottom, and the structure and process involved in the aforementioned method are relatively complex. The sealing member 13 of this embodiment is integrally injection-molded, eliminating the sealing ring used in the prior art. A sealing surface is formed by relying on the full integration of the sealing member 13 with the pole 12 and the top cover plate, ensuring the air tightness requirement. The nano-injection molding process is relatively simple and the cost is relatively low.

The performance of the technical solution provided by the embodiments of the present application is evaluated below with reference to specific examples and comparative examples.

Example 1

The area A1 mm2 of the first end face 121 of the pole 12 is 400 mm2. The position where the bus-bar is connected on the first end face 121 is circular, and the diameter D1 mm of the circle is 11 mm. The area M mm2 of the third end face 112 of the top cover member 11 is 7300 mm2.

Example 2

The area A1 mm2 of the first end face 121 of the pole 12 is 500 mm2. The position where the bus-bar is connected on the first end face 121 is circular, and the diameter D1 mm of the circle is 11 mm. The area M mm2 of the third end face 112 of the top cover member 11 is 7300 mm2.

Example 3

The area A1 mm2 of the first end face 121 of the pole 12 is 600 mm2. The position where the bus-bar is connected on the first end face 121 is circular, and the diameter D1 mm of the circle is 11 mm. The area M mm2 of the third end face 112 of the top cover member 11 is 7300 mm2.

Example 4

The area A1 mm2 of the first end face 121 of the pole 12 is 700 mm2. The position where the bus-bar is connected on the first end face 121 is circular, and the diameter D1 mm of the circle is 11 mm. The area M mm2 of the third end face 112 of the top cover member 11 is 7300 mm2.

Example 5

The area A1 mm2 of the first end face 121 of the pole 12 is 400 mm2. The position where the bus-bar is connected on the first end face 121 is circular, and the diameter D1 mm of the circle is 11 mm. The area M mm2 of the third end face 112 of the top cover member 11 is 6500 mm2.

Example 6

The area A1 mm2 of the first end face 121 of the pole 12 is 500 mm2. The position where the bus-bar is connected on the first end face 121 is circular, and the diameter D1 mm of the circle is 11 mm. The area M mm2 of the third end face 112 of the top cover member 11 is 6500 mm2.

Example 7

The area A1 mm2 of the first end face 121 of the pole 12 is 600 mm2. The position where the bus-bar is connected on the first end face 121 is circular, and the diameter D1 mm of the circle is 11 mm. The area M mm2 of the third end face 112 of the top cover member 11 is 6500 mm2.

Example 8

The area A1 mm2 of the first end face 121 of the pole 12 is 700 mm2. The position where the bus-bar is connected on the first end face 121 is circular, and the diameter D1 mm of the circle is 11 mm. The area M mm2 of the third end face 112 of the top cover member 11 is 6500 mm2.

Comparative Example 1

The difference of this Comparative Example from Example 1 above lies in that the area A1 mm2 of the first end face 121 of the pole 12 is 100 mm2.

Comparative Example 2

The difference of this Comparative Example from Example 1 above lies in that the area A1 mm2 of the first end face 121 of the pole 12 is 120 mm2.

Comparative Example 3

The difference of this Comparative Example from Example 5 above lies in that the area A1 mm2 of the first end face 121 of the pole 12 is 1500 mm2.

Comparative Example 4

The difference of this Comparative Example from Example 1 above lies in that the position where the bus-bar is connected on the first end face 121 is circular, and the diameter D1 mm of the circle is 6 mm.

Comparative Example 5

The difference of this Comparative Example from Example 1 above lies in that the position where the bus-bar is connected on the first end face 121 is circular, and the diameter D1 mm of the circle is 18 mm.
The table below records the parameters of Examples 1 to 8 and Comparative Examples 1 to 5, as well as the test results.

| Serial Number | A1 | M | D1 | Whether the sealing member is melted | Drawing force of the welded area (N) |
|---|---|---|---|---|---|
| Example 1 | 400 | 7300 | 11 | No | 886 |
| Example 2 | 500 | 7300 | 11 | No | 850 |
| Example 3 | 600 | 7300 | 11 | No | 831 |
| Example 4 | 700 | 7300 | 11 | No | 776 |
| Example 5 | 400 | 6500 | 11 | No | 876 |
| Example 6 | 500 | 6500 | 11 | No | 861 |
| Example 7 | 600 | 6500 | 11 | No | 824 |

(continued)

| Serial Number | A1 | M | D1 | Whether the sealing member is melted | Drawing force of the welded area (N) |
|---|---|---|---|---|---|
| Example 8 | 700 | 6500 | 11 | No | 756 |
| Comparative Example 1 | 100 | 7300 | 11 | Yes | 1123 |
| Comparative Example 2 | 120 | 7300 | 11 | Yes | 1135 |
| Comparative Example 3 | 1500 | 6500 | 11 | No | 663 |
| Comparative Example 4 | 400 | 7300 | 6 | No | 450 |
| Comparative Example 5 | 400 | 7300 | 18 | Yes | 1230 |

Result Analysis: in the embodiments of the present application, the area of the first end face 121 of the pole 12 is set to A1 mm2, the area of the third end face 112 of the top cover member 11 is set to M mm2, and the area of the position where the bus-bar is connected on the first end face 121 is set to S1 mm2, satisfying: $\frac{M}{16} \le A1 \le \frac{M}{4}$, A1 $\ge$ 150, and 0.06 $\le$ S1/A1 $\le$ 0.6. In this way, on one hand, it can avoid as much as possible that the welding position on the first end face 121 is too close to the sealing member 13 due to the area of the first end face 121 being too small, which can reduce the risk of sealing failure of the sealing member 13; on the other hand, it can avoid as much as possible that the connection strength of the welding area fails to meet requirements due to the area of the first end face 121 being too large.

Example 9

The area A2 mm2 of the second end face 122 of the pole 12 is 200 mm2. The position where the connector 14 is connected on the second end face 122 is circular, and the diameter D2 mm of the circle is 9 mm. The area M mm2 of the third end face 112 of the top cover member 11 is 7300 mm2.

Example 10

The area A2 mm2 of the second end face 122 of the pole 12 is 400 mm2. The position where the connector 14 is connected on the second end face 122 is circular, and the diameter D2 mm of the circle is 9 mm. The area M mm2 of the third end face 112 of the top cover member 11 is 7300 mm2.

Example 11

The area A2 mm2 of the second end face 122 of the pole 12 is 200 mm2. The position where the connector 14 is connected on the second end face 122 is circular, and the diameter D2 mm of the circle is 9 mm. The area M mm2 of the third end face 112 of the top cover member 11 is 5600 mm2.

Example 12

The area A2 mm2 of the second end face 122 of the pole 12 is 400 mm2. The position where the connector 14 is connected on the second end face 122 is circular, and the diameter D2 mm of the circle is 9 mm. The area M mm2 of the third end face 112 of the top cover member 11 is 5600 mm2.

Example 13

The area A2 mm2 of the second end face 122 of the pole 12 is 300 mm2. The position where the connector 14 is connected on the second end face 122 is circular, and the diameter D2 mm of the circle is 9 mm. The area M mm2 of the third end face 112 of the top cover member 11 is 6500 mm2.

Example 14

The area A2 mm2 of the second end face 122 of the pole 12 is 600 mm2. The position where the connector 14 is connected on the second end face 122 is circular, and the diameter D2 mm of the circle is 9 mm. The area M mm2 of the third end face 112 of the top cover member 11 is 6500 mm2.

Example 15

The area A2 mm2 of the second end face 122 of the pole 12 is 400 mm2. The position where the connector 14 is connected on the second end face 122 is circular, and the diameter D2 mm of the circle is 9 mm. The area M mm2 of the third end face 112 of the top cover member 11 is 6500 mm2.

Example 16

The area A2 mm2 of the second end face 122 of the pole 12 is 200 mm2. The position where the connector 14 is connected on the second end face 122 is circular, and the diameter D2 mm of the circle is 9 mm. The area M mm2 of the third end face 112 of the top cover member 11 is 6500mm2.

Comparative Example 6

The difference of this Comparative Example from Example 9 above lies in that the area A2 mm2 of the second end face 122 of the pole 12 is 100 mm2.

Comparative Example 7

The difference of this Comparative Example from Example 9 above lies in that the area A2 mm2 of the second end face 122 of the pole 12 is 120 mm2.

Comparative Example 8

The difference of this Comparative Example from Example 11 above lies in that the area A2 mm2 of the second end face 122 of the pole 12 is 1500 mm2.

Comparative Example 9

The difference of this Comparative Example from Example 9 above lies in that the position where the connector 14 is connected on the second end face 122 is circular, and the diameter D2 mm of this circle is 6 mm.

Comparative Example 10

The difference of this Comparative Example from Example 9 above lies in that the position where the connector 14 is connected on the second end face 122 is circular, and the diameter D2 mm of this circle is 15 mm.
The table below records the parameters of Examples 9 to 16 and Comparative Examples 6 to 10, as well as the test results.

| Serial Number | A2 | M | D2 | Whether the sealing member is melted | Drawing force of the welded area (N) |
|---|---|---|---|---|---|
| Example 9 | 200 | 7300 | 9 | No | 803 |
| Example 10 | 400 | 7300 | 9 | No | 743 |
| Example 11 | 200 | 5600 | 9 | No | 788 |
| Example 12 | 400 | 5600 | 9 | No | 735 |
| Example 13 | 300 | 6500 | 9 | No | 776 |
| Example 14 | 600 | 6500 | 9 | No | 689 |
| Example 15 | 400 | 6500 | 9 | No | 734 |
| Example 16 | 200 | 6500 | 9 | No | 821 |
| Comparative Example 6 | 100 | 7300 | 9 | Yes | 1023 |
| Comparative Example 7 | 120 | 7300 | 9 | Yes | 996 |

(continued)

| Serial Number | A2 | M | D2 | Whether the sealing member is melted | Drawing force of the welded area (N) |
|---|---|---|---|---|---|
| Comparative Example 8 | 1500 | 5600 | 9 | No | 650 |
| Comparative Example 9 | 200 | 7300 | 6 | No | 400 |
| Comparative Example 10 | 200 | 7300 | 15 | Yes | 1034 |

Result Analysis: in the embodiments of the present application, the area of the second end face 122 of the pole 12 is set to A2 mm2, the area of the third end face 112 of the top cover member 11 is set to M mm2, and the area of the position where the connector 14 is connected on the second end face 122 is set to S2 mm2, satisfying: $\frac{M}{16} \leq A2 \leq \frac{M}{4}$ , A2 $\geq$ 150, and 0.06 $\leq$ S2/A2 $\leq$ 0.6. In this way, on one hand, it can avoid as much as possible that the welding position on the second end face 122 is too close to the sealing member 13 due to the area of the second end face 122 being too small, which can reduce the risk of sealing failure of the sealing member 13; on the other hand, it can avoid as much as possible that the connection strength of the welding area fails to meet requirements due to the area of the second end face 122 being too large.

The foregoing descriptions are merely preferred embodiments of the present application and are not intended to limit the scope of implementation of the present application. Any equivalent changes and modifications made based on the shapes, structures, features, and spirit described in the scope of the claims of the present application shall be included within the scope of the claims of the present application.

**Claims**

1. A battery pack, comprising:

a single battery comprising a shell and a top cover assembly, wherein the shell and the top cover assembly are butted to form a cavity for accommodating a battery cell; and
a bus-bar electrically connected to the single battery;
wherein the top cover assembly has a preset direction, and the top cover assembly comprises:

a top cover member provided with an assembly hole, wherein the assembly hole is penetrated through the top cover member along the preset direction;
a pole disposed through the assembly hole, an end face of the pole in the preset direction being connected to the bus-bar, wherein a position where the bus-bar is connected on the end face is spaced apart from an outer edge of the end face; and
a sealing member disposed between the pole and the top cover member.

2. The battery pack according to claim 1, wherein an area of the end face of the pole in the preset direction is A mm2, and an area of an end face of the top cover member in the preset direction is M mm2, wherein $\frac{M}{16} \leq A \leq \frac{M}{4}$ .

3. The battery pack according to claim 1, wherein an area of the end face of the pole in the preset direction is A mm2, satisfying: A $\geq$ 150.

4. The battery pack according to any one of claims 1 to 3, wherein

the end face of the pole in the preset direction comprises a first end face and a second end face, the first end face and the second end face being spaced apart from each other in the preset direction;
wherein the first end face is connected to the bus-bar, and a position where the bus-bar is connected on the first end face is spaced apart from an outer edge of the first end face, the single battery further comprises a connector, the pole is electrically connected to the battery cell via the connector, the second end face is connected to the connector, and a position where the connector is connected on the second end face is spaced apart from an outer edge of the second end face.

5. The battery pack according to claim 4, wherein
the pole comprises:

a pole body disposed through the assembly hole; and
a limiting portion connected to one end of the pole body in the preset direction, wherein an end face of the limiting portion facing away from the pole body is the first end face, an end face of the pole body facing away from the limiting portion is the second end face, and the limiting portion cooperates with the connector to clamp the top cover member, so as to fix the pole to the top cover member.

6. The battery pack according to claim 4, wherein
an area of the second end face is less than an area of an end face of the connector facing the pole.

7. The battery pack according to claim 4, wherein
an area of the first end face is greater than an area of the second end face.

8. The battery pack according to claim 5, wherein
the sealing member comprises:

a first sealing portion surrounding an outer periphery of the pole body, the first sealing portion being sandwiched between the pole body and a hole wall of the assembly hole;
a second sealing portion connected to the first sealing portion, the second sealing portion surrounding an outer periphery of the limiting portion; and
a third sealing portion connected to the first sealing portion, the third sealing portion being sandwiched between the top cover member and the connector;
wherein the first sealing portion, the second sealing portion, and the third sealing portion are an integrally injection-molded structure.

9. The battery pack according to claim 1, wherein
an area of the end face is A mm$^2$, and an area of a position where the bus-bar is connected on the end face is S mm$^2$, satisfying: $0.06 \leq S/A \leq 0.6$.

10. A battery pack, comprising:

a single battery, comprising a shell, a top cover assembly, a battery cell, and a connector, wherein the shell and the top cover assembly are butted to form a cavity for accommodating the battery cell, and the connector is electrically connected to the battery cell;
wherein the top cover assembly has a preset direction, and the top cover assembly comprises:

a top cover member provided with an assembly hole, wherein the assembly hole is penetrated through the top cover member along the preset direction;
a pole disposed through the assembly hole, an end face of the pole in the preset direction being connected to the connector, wherein a position where the connector is connected on the end face is spaced apart from an outer edge of the end face; and
a sealing member disposed between the pole and the top cover member.

11. The battery pack according to claim 10, wherein
an area of the end face of the pole in the preset direction is A mm$^2$, and an area of an end face of the top cover member in the preset direction is M mm$^2$, wherein $\dfrac{M}{16} \leq A \leq \dfrac{M}{4}$ .

12. The battery pack according to claim 10, wherein
an area of the end face of the pole in the preset direction is A mm$^2$, satisfying: $A \geq 150$.

13. The battery pack according to claim 10, wherein
an area of the end face is A mm$^2$, and an area of a position where the connector is connected on the end face is S mm$^2$,

satisfying: $0.06 \leq S/A \leq 0.6$.

14. An electric device, comprising the battery pack according to any one of claims 1 to 13, wherein the battery pack is a power supply for the electric device.

10

11

A — A

13    12

FIG. 1

12    11    112

13

14

FIG. 2

FIG. 3

FIG. 4

FIG. 5

FIG. 6

<u>14</u>

141

FIG. 7

## INTERNATIONAL SEARCH REPORT

| International application No. |
| --- |
| **PCT/CN2023/142180** |

**A. CLASSIFICATION OF SUBJECT MATTER**

H01M 50/516(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 极柱, 顶盖, 密封, 面积, 汇流排, 凸, 焊, 间隔, 距离, 融, 溶, 熔, pole, cap, seal, bar, weld+, distance, melt+

**C. DOCUMENTS CONSIDERED TO BE RELEVANT**

| Category* | Citation of document, with indication, where appropriate, of the relevant passages | Relevant to claim No. |
| --- | --- | --- |
| X | CN 115275463 A (FARASIS ENERGY (GANZHOU) CO., LTD. et al.) 01 November 2022 (2022-11-01) <br> description, paragraphs [0052]-[0087], and figures 1-15 | 1-4, 6-7, 9-14 |
| Y | CN 115275463 A (FARASIS ENERGY (GANZHOU) CO., LTD. et al.) 01 November 2022 (2022-11-01) <br> description, paragraphs [0052]-[0087], and figures 1-15 | 5, 8 |
| Y | CN 116315331 A (ZHEJIANG GEELY AUTOMOBILE HOLDINGS LIMITED et al.) 23 June 2023 (2023-06-23) <br> description, paragraphs [0040] and [0062], and figures 2-3 | 5, 8 |
| PX | CN 220138625 U (SUNWODA POWER TECHNOLOGY CO., LTD.) 05 December 2023 (2023-12-05) <br> description, paragraphs [0032]-[0107], and figures 1-7 | 1-14 |
| A | CN 219040589 U (CONTEMPORARY AMPEREX TECHNOLOGY CO., LTD.) 16 May 2023 (2023-05-16) <br> entire document | 1-14 |

☑ Further documents are listed in the continuation of Box C. ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 March 2024** | **19 March 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/142180** |

### C. DOCUMENTS CONSIDERED TO BE RELEVANT

| Category* | Citation of document, with indication, where appropriate, of the relevant passages | Relevant to claim No. |
|---|---|---|
| A | US 2012021278 A1 (BYUN, Sangwon et al.) 26 January 2012 (2012-01-26)<br>entire document | 1-14 |

Form PCT/ISA/210 (second sheet) (July 2022)

## INTERNATIONAL SEARCH REPORT
### Information on patent family members

International application No.

**PCT/CN2023/142180**

| Patent document cited in search report | | | Publication date (day/month/year) | Patent family member(s) | | | Publication date (day/month/year) |
|---|---|---|---|---|---|---|---|
| CN | 115275463 | A | 01 November 2022 | None | | | |
| CN | 116315331 | A | 23 June 2023 | None | | | |
| CN | 220138625 | U | 05 December 2023 | None | | | |
| CN | 219040589 | U | 16 May 2023 | None | | | |
| US | 2012021278 | A1 | 26 January 2012 | EP | 2410595 | A1 | 25 January 2012 |
| | | | | EP | 2410595 | B1 | 21 January 2015 |
| | | | | US | 9537135 | B2 | 03 January 2017 |
| | | | | KR | 20120010092 | A | 02 February 2012 |
| | | | | KR | 101222336 | B1 | 15 January 2013 |
| | | | | JP | 2012028308 | A | 09 February 2012 |
| | | | | JP | 5352612 | B2 | 27 November 2013 |

Form PCT/ISA/210 (patent family annex) (July 2022)

**EP 4 693 696 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202321653972